(19) Europäisches Patentamt
European Patent Office
Office européen des brevets

(11) **EP 3 088 080 B1**

(12) **EUROPEAN PATENT SPECIFICATION**

(45) Date of publication and mention
of the grant of the patent:
**25.04.2018 Bulletin 2018/17**

(51) Int Cl.:
**B01J 29/76** (2006.01)    **B01D 53/86** (2006.01)
**B01J 37/02** (2006.01)    **B01J 29/072** (2006.01)
**B01J 23/42** (2006.01)

(21) Application number: **14874382.6**

(22) Date of filing: **25.12.2014**

(86) International application number:
**PCT/JP2014/084277**

(87) International publication number:
**WO 2015/099024 (02.07.2015 Gazette 2015/26)**

(54) **AMMONIA DECOMPOSITION CATALYST**

KATALYSATOR FÜR AMMONIAKZERSETZUNG

CATALYSEUR DE DÉCOMPOSITION D'AMMONIAC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2013 JP 2013269464**

(43) Date of publication of application:
**02.11.2016 Bulletin 2016/44**

(73) Proprietor: **Nikki-Universal Co., Ltd.**
**Shinagawa-ku**
**Tokyo 141-8563 (JP)**

(72) Inventors:
• **IKOMA, Tomoo**
**Hiratsuka-shi**
**Kanagawa 254-0014 (JP)**
• **NASHIDA, Toshiya**
**Hiratsuka-shi**
**Kanagawa 254-0014 (JP)**
• **SAKURAI, Takanobu**
**Hiratsuka-shi**
**Kanagawa 254-0014 (JP)**

(74) Representative: **Vossius & Partner**
**Patentanwälte Rechtsanwälte mbB**
**Siebertstrasse 3**
**81675 München (DE)**

(56) References cited:
**EP-A2- 1 074 289**    **WO-A1-2006/006702**
**WO-A1-2009/075311**    **WO-A1-2009/075311**
**WO-A1-2012/132678**    **JP-A- H07 328 437**
**JP-A- H11 300 211**    **US-A1- 2012 328 499**

• **ISABELLA NOVA ET AL.: 'Experimental and Modelling Study of a Dual-Layer NH3 Slip Monolith Catalyst for Automotive SCR Aftertreatment Systems' TOPICS IN CATALYSIS vol. 56, no. 1, 01 May 2013, pages 227 - 231, XP055354919 DOI: 10.1007/S11244-013-9957-9**
• **SACHI SHRESTHA ET AL.: 'Selective oxidation of ammonia on mixed and dual-layer Fe-ZSM-5+Pt/ A1203 monolithic catalysts' CATAL. TODAY vol. 231, 01 January 2014, pages 105 - 115, XP055354931 DOI: 10.1016/J.CATTOD.2014.01.024**

**Description**

TECHNICAL FIELD

This invention relates to an ammonia decomposition catalyst, and a method for treating an exhaust gas containing ammonia (ammonia exhaust gas). More specifically, the present invention relates to an ammonia decomposition catalyst to be used for an ammonia exhaust gas with a high moisture content.

BACKGROUND ART

An $NH_3$ gas and ammonia water are used widely and in large amounts for industrial applications. Their examples include $NH_3$ nitrogen in sewage treatment, and waste water containing $NH_3$ for use in the step of removing particles in semiconductor manufacturing.

However, the $NH_3$ gas is a substance having a pungent odor and, for its release to the atmosphere, its emission amount is regulated by the Offensive Odor Control Law. When in drainage (waste water), its discharge amount is regulated by the Water Pollution Control Law, because it is a BOD increasing substance.

As a method for removing $NH_3$ from drainage (waste water) containing $NH_3$, the stripping method, for example, is known which comprises adding an alkali to $NH_3$ nitrogen, and feeding a vapor or air into the system, with its temperature being raised. According to this method, $NH_3$ in the waste water is first separated by a stripping tower into a gaseous phase. The released $NH_3$ is oxidatively decomposed with an $NH_3$ oxidation catalyst into harmless $N_2$ and water, which are released to the atmosphere (see Patent Document 1). The ammonia oxidation catalyst used here is a substance in which at least one metal element selected from among Fe, Ni, Co, Pt, Pd, Ru, V, Cu, Cr, W and Mo is supported on or incorporated into at least one carrier selected from among titania, zirconia, alumina, silica, activated carbon and composites of them.

A method for treating an $NH_3$-containing exhaust gas with two-stage catalyst layers has been proposed. With this method, it is reported that using the catalyst layer in the preceding stage, $NH_3$ is treated with an ammonia oxidation catalyst containing Ti, Ag and one or more of Fe, Mn, Zn, Mo, V and W, and nitrogen oxides as by-products formed upon treatment of $NH_3$ are reductively treated with a publicly known catalyst layer composed of Ti, Mo and V in the succeeding stage (see Patent Document 2). According to this method of treatment with the two-stage catalyst layers, however, the reduction treatment of the nitrogen oxides in the succeeding stage uses a part of the $NH_3$ gas before treatment. Thus, a means for extracting the part of the $NH_3$ gas before treatment and sending it to the catalyst layer in the succeeding stage, and the control of its gas flow are needed, thus complicating the apparatus and reaction control. In accordance with changes in the $NH_3$ concentration in the $NH_3$ gas, moreover, the concentration of $NO_x$ also changes, making it difficult to desire a stable operation.

As a method of decomposing an $NH_3$-containing gas into harmless $N_2$ and water and releasing them to the atmosphere, an $NH_3$ oxidation catalyst for treating excess $NH_3$ in a denitration catalyst, for example, is considered to be effective (see Patent Document 3).

A proposal has been made for a method which decomposes $NH_3$ with an $NH_3$ decomposition catalyst while minimizing the formation of $NO_x$ as much as possible in a preceding step, and brings nitrous oxide ($N_2O$) in the resulting treatment gas into contact with an $N_2O$ decomposition catalyst in a subsequent step to treat it. The $N_2O$ decomposition catalyst that can be used in the subsequent step is exemplified by a catalyst having Cu supported on a zeolite composed of silicon and oxygen, which is indicated by a rational formula $(SiO_2)_{55}$, an Fe-ion exchanged β zeolite, etc. (see Patent Document 4).

As a method for treatment using a one-stage catalyst, a proposal has been made for a catalyst composed of a catalyst component 1 which performs reduction of a nitrogen oxide, and a second component having the activity of oxidizing $NH_3$ to form $NO_x$. A concrete example proposed is a purification method which uses a catalyst containing an oxide of titanium, an oxide of W, V or Mo and silica, zeolite or alumina supporting a noble metal, measures the outlet $N_2O$ concentration and oxygen in the process, and adjusts the gas flow rate of the catalyst layer and the oxygen concentration in the process (see Patent Document 5 and Patent Document 6).

The catalysts in the exemplifications of the conventional technologies contain V, and show cases where V is scattered when the operating temperature range exceeds 410°C. Thus, a V-free $NH_3$ decomposition catalyst is desired.

The present inventors reported an invention of a catalyst for purification of an organic nitrogen compound-containing exhaust gas, the catalyst being formed by mixing copper oxide particles and zeolite particles which can convert an organic compound into $N_2$ for detoxification (see Patent Document 7). In decomposing ammonia in an exhaust gas containing a high concentration of a water vapor, such as a water vapor concentration as high as 10% by volume or more, in comparison with an ammonia exhaust gas having a water vapor concentration of 2 to 10% by volume or less, however, even the same catalyst may be insufficient in an ammonia decomposition rate and, after a long period of use, may have its activity decreased.

Further, the present inventors proposed the following ammonia decomposition catalyst as a catalyst for stripping of an exhaust gas in sewage treatment, the catalyst being highly resistant in the presence of high moisture and high sulfur and having a long life: Containing copper oxide (component 1), zeolite (component 2), noble metal (component 3), and phosphorus (component 4), and optionally, inorganic oxide (component 5); (c) the content of the copper oxide is 2 to 40 parts by weight based on the total 100 parts by weight of the copper oxide and the zeolite; and (d) the content of the phosphorus is 0.01 to 5% by weight, as P, based on the total weight of the copper oxide and the zeolite (see Patent Document 8). However, the proportions of $NO_x$ and $N_2O$ formed as by-products upon use of the catalyst are 1 to 5%, values still insufficient under circumstances in recent years where the importance of environmental protection measures has increased even more. Hence, a catalyst, which lowers the ratio of $NO_x$ formed as a by-product to 0.6% or less and minimizes the formation of $N_2O$ as a by-product, is desired.

On the other, a catalyst of a two-layer structure having an SCR layer on a $Pt/Al_2O_3$ layer has been reported (see Non-Patent Document 1). This document describes experiments conducted on a laboratory scale in which the provision of the SCR layer decreased NO formation and improved $N_2$ selectivity, but also decreased $NH_3$ conversion as a whole.

Similarly, a two-layer ammonia stripping catalyst composed of an SCR layer and a PGM layer has been proposed (see Non-Patent Document 2). This document describes that this two-layer catalyst can be expected to achieve a high efficiency of $NO_x$ elimination with a minimum ammonia breakthrough in an automobile urea-SCR catalyst converter.

CITATION LIST

PATENT DOCUMENTS

Patent Document 1: JP-A-11-76761
Patent Document 2: JP-A-10-309437
Patent Document 3: JP-A-05-146634
Patent Document 4: JP-A-2005-95786
Patent Document 5: JP-A-2002-52381
Patent Document 6: JP-A-2002-66538
Patent Document 7: International Publication WO2006/006702
Patent Document 8: International Publication WO2009/075311

NON-PATENT DOCUMENTS

Non-Patent Document 1: Applied Catalysis B: Environmental 111-112 (2012) 445-455
Non-Patent Document 2: Chemical Engineering Science 75 (2012) 75-83

SUMMARY OF INVENTION

TECHNICAL PROBLEM

Objects of the present invention are:

(1) to provide a catalyst which decomposes ammonia to convert ammonia into $N_2$ for detoxification, while keeping the formation rate of $NO_x$ as a by-product to 0.6% or less, and restricting the formation of $N_2O$ as a by-product to a minimum;

(2) to provide a catalyst which decomposes ammonia in an ammonia exhaust gas having a moisture concentration of 10 to 60% by volume, further a moisture concentration of 10 to 50% by volume, into nitrogen with a high efficiency; and

(3) to provide a catalyst which has initial activity and also has durability even when treating an exhaust gas containing sulfur compounds.

SOLUTION TO PROBLEM

In an attempt to attain the above objects, the present inventors conducted in-depth studies and accomplished the present invention. An ammonia decomposition catalyst and a method for treating an ammonia exhaust gas according to the present invention are as will be described below. That is, the present invention lies in an ammonia decomposition catalyst for treating an ammonia exhaust gas containing moisture, the catalyst comprising:

a lower layer having a noble metal, an inorganic oxide, phosphorus, and a first proton type zeolite or a first ion exchange type zeolite ion-exchanged with Cu, Co or Fe ions; and

an upper layer provided on the lower layer and having a second proton type zeolite or a second ion exchange type zeolite ion-exchanged with Cu, Co or Fe ions.

Another aspect of the present invention lies in an exhaust gas treatment method for treating an ammonia exhaust gas containing moisture, the method comprising a step of bringing the above-mentioned ammonia decomposition catalyst and an ammonia exhaust gas into contact with each other to decompose ammonia into nitrogen and water.

ADVANTAGEOUS EFFECTS OF INVENTION

The ammonia decomposition catalyst of the present invention shows a high $NH_3$ decomposition rate even for an ammonia exhaust gas with a high moisture content, and can suppress $NO_x$ highly and inhibit the formation of $N_2O$ as a by-product.

Moreover, the ammonia decomposition catalyst of the present invention has initial activity and also has high durability even when treating an exhaust gas containing sulfur compounds.

BRIEF DESCRIPTION OF DRAWINGS

Fig. 1 is a drawing showing a comparison of performance evaluations of a comparative catalyst (B-3) and the catalysts of the present invention, (A-1) and (D-1).

Fig. 2 is a drawing showing the results of a durability test on the catalyst of the present invention, (A-1), at an inlet temperature of 340°C.

Fig. 3 is drawings showing the results of durability tests on the catalyst of the present invention, (D-1), at inlet temperatures of 250°C and 340°C.

Fig. 4 is a drawing showing a comparison of durability tests on a conventional catalyst (C-4) and the catalyst of the present invention, (A-1).

Fig. 5 is a drawing showing the results of a durability test on the conventional catalyst (C-4).

DESCRIPTION OF EMBODIMENTS

(Definitions of terms)

The terms used herein have the following meanings unless otherwise noted:

Moisture-containing ammonia exhaust gas: Refers to an ammonia exhaust gas having a moisture concentration of 10% by volume or more.

Decomposition rate: Refers to the ratio (%) between the ammonia concentrations in the exhaust gas before contact with the catalyst and after contact with the catalyst.

$NO_x$ formation rate and $N_2O$ formation rate: Refer to the ratios (%) of the $NO_x$ concentration and $N_2O$ concentration formed in the exhaust gas after contact with the catalyst, to the ammonia concentration in the exhaust gas before contact with the catalyst.

Nitrogen oxides: Refer to both of $NO_x$ and $N_2O$, and may be expressed as $NO_x$, etc.

$N_2$ selection rate: Refers to a value obtained by subtracting the formation rate of $NO_x$, etc. in the exhaust gas after contact with the catalyst, from the decomposition rate. That is, this parameter refers to the proportion of ammonia converted into $N_2$ from the amount of ammonia present before contact with the catalyst.

New catalyst: Refers to the catalyst immediately after preparation or within a short period after start of use in exhaust gas treatment. The activity of the new catalyst refers to initial activity.

Used catalyst: Refers to the catalyst after treatment of the exhaust gas for a long period. To evaluate catalyst durability, the activity, etc. of the used catalyst are measured.

The present invention will be described in further detail below.

The present invention lies in an ammonia decomposition catalyst for treating a moisture-containing ammonia exhaust gas, the catalyst comprising:

a lower layer having a noble metal, an inorganic oxide, phosphorus, and a first proton type zeolite or a first ion exchange type zeolite ion-exchanged with Cu, Co or Fe ions; and

an upper layer provided on the lower layer and having a second proton type zeolite or a second ion exchange type zeolite ion-exchanged with Cu, Co or Fe ions.

That is, the catalyst is particularly characterized by having the lower layer containing an ammonia oxidation catalyst component and a denitration component, and further having on the lower layer the upper layer containing a denitration component.

Hereinafter, components for use in the catalyst of the present invention will be described concretely.

<Noble metal>

The noble metal used in the present invention is exemplified by Pt, Pd, Ir, Rh and their composites. Of these noble metals, Pt is particularly preferred, because it has high decomposition activity and a high effect of increasing the $N_2$ selection rate.

The content of the noble metal is preferably 0.05% by weight or more, but 5% by weight or less, more preferably 0.2% by weight or more, but 2% by weight or less, based on the total weight of the noble metal, inorganic oxide, phosphorus and zeolite contained in the lower layer. The amount of the noble metal supported is preferably 0.05 g/L or more, but 5 g/L or less, more preferably 0.1 g/L or more, but 3 g/L or less, and further preferably 0.2 g/L or more, but 1 g/L or less, based on the volume of the catalyst. If the above parameters are within these ranges, more satisfactory results are obtained in connection with the ammonia decomposition rate, the $NO_x$ formation rate, and the $N_2O$ formation rate.

<Inorganic oxide>

The inorganic oxide used in the present invention is exemplified by at least one inorganic oxide selected from among titania ($TiO_2$), zirconia ($ZrO_2$), silica ($SiO_2$), alumina, and a complex oxide or solid solution of ceria-zirconia (represented by $CeO_2 \cdot ZrO_2$, the $CeO_2$:$ZrO_2$ molar ratio = 1:3 to 3:1). Incorporation of the above-mentioned inorganic oxide is particularly effective for enhancing the action of the noble metal, namely, its decomposition activity, especially, for improving the persistence of the decomposition activity during long-term usage. Of those inorganic oxides, $TiO_2$, $ZrO_2$, and ceria-zirconia, in particular, are superior in the effect of being persistent in decomposition activity during a long period of use. The content of the inorganic oxide in the catalyst is preferably 5% by weight or more, but 50% by weight or less, more preferably 10% by weight or more, but 35% by weight or less, based on the total weight of the noble metal, inorganic oxide, phosphorus and zeolite contained in the lower layer. The amount of the inorganic oxide supported is preferably 1 g/L or more, but 50 g/L or less, more preferably 5 g/L or more, but 20 g/L or less, based on the volume of the catalyst. If the above parameters are within these ranges, more satisfactory results are obtained in connection with the ammonia decomposition rate, the $NO_x$ formation rate, and the $N_2O$ formation rate.

It is particularly effective for the inorganic oxide to be contained in the catalyst, with the inorganic oxide supporting the noble metal. For example, $TiO_2$ particles having Pt supported beforehand thereon in an amount of 0.1% to 5% by weight based on $TiO_2$ (these particles are expressed as $Pt/TiO_2$) are provided, and these particles are mixed with the other components, whereby a catalyst composition containing the noble metal and the inorganic oxide can be prepared.

The size of the particles of the inorganic oxide used in the present invention, expressed as the average particle size, is preferably 0.1 $\mu$m or more, but 100 $\mu$m or less, in order to allow the noble metal component in the catalyst composition to function more effectively. The particle size here refers to the size of secondary particles, and is the dimension of the major diameter as observed by SEM. The average particle size is the average of the values obtained when at least 10 of the particles were measured for the major diameter using the SEM.

$TiO_2$ which can be used in the present invention is one having a BET specific surface area of, preferably, 5 to 200 $m^2$/g, more preferably 10 to 150 $m^2$/g.

$ZrO_2$ usable in the present invention is a $ZrO_2$ powder generally on the market, especially, a porous one having a specific surface area of 10 $m^2$/g or more, regardless of a monoclinic system, a tetragonal system, or a cubic system. $ZrO_2$ compounds of a composite system, for example, $ZrO_2 \cdot nCeO_2$, $ZrO_2$-$nSiO_2$, and $ZrO_2 \cdot nTiO_2$ (n generally denotes 0.25 to 0.75), can also be used.

The $SiO_2$ that can be used in the present invention includes high silica zeolite having a zeolite structure, for example, mordenite.

<Phosphorus>

In the present invention, a phosphorus-containing compound which can be used to incorporate phosphorus into the lower layer of the ammonia decomposition catalyst is exemplified by water-soluble phosphoric acids, such as phosphoric acid ($H_3PO_4$), metaphosphoric acid, ammonium dihydrogenphosphate ($NH_4H_2PO_4$), and ammonium secondary phosphate (($NH_4)_2HPO_4$); and inorganic salts such as Na salts, K salts and ammonium salts or organic esters of these phosphoric acids.

The lower layer of the ammonia decomposition catalyst of the present invention contains phosphorus together with the noble metal, inorganic oxide, proton type or ion exchange type zeolite. The content of the phosphorus is preferably 0.1% by weight or more, but 10% by weight or less, more preferably 1% by weight or more, but 5% by weight or less, based on the total weight of the noble metal, inorganic oxide, phosphorus, and zeolite contained in the lower layer. The amount of the phosphorus supported is preferably 0.1 g/L or more, but 10 g/L or less, more preferably 0.5 g/L or more, but 5 g/L or less, based on the volume of the catalyst.

The content of the phosphorus may be determined in consideration of the composition of the exhaust gas, namely, ammonia concentration, moisture concentration, etc., and the treatment conditions, namely, the treatment temperature, the operating time of the catalyst, and so on. If the content or the amount supported is too low from the above range, the effect of improving durability is insufficient. If the content or the supported amount of phosphorus is too high from the above range, initial activity may decline.

The conventional ammonia decomposition catalysts are prone to undergo a decline in activity due to deterioration, if they are used for long periods at the reaction temperature in an ammonia exhaust gas containing large amounts of moisture. The ammonia decomposition catalyst of the present invention, however, contains phosphorus, thus providing the marked effects that decreases in activity minimally occur, long-term decomposition activity performance lasts, and a high $N_2$ selection rate persists. The incorporation of phosphorus, moreover, effectively prevents lowering of activity during treatment of an ammonia exhaust gas containing sulfur compounds such as hydrogen sulfide, thiophene, and sulfide. The ammonia decomposition catalyst of the present invention containing phosphorus, whether a new catalyst or a used catalyst, further shows the effects of decomposing ammonia at a high rate and decreasing the formation of $NO_x$, etc. as by-products.

(Method of phosphorus application)

To incorporate phosphorus into the lower layer, a solution of a phosphorus-containing compound and deionized water are mixed first to prepare a phosphorus solution. The resulting solution is coated on a pre-produced layer containing a noble metal, an inorganic oxide, and a first proton type zeolite or a first ion-exchange type zeolite, and the excess solution is blown off by an air blow. Then, the coated layer is subjected to drying and calcining.

The phosphorus may be concentrated within the lower layer toward the upper layer. That is, the content of the phosphorus may be configured to be sequentially decreased or progressively decreased, with the highest content being at the top of the lower layer.

<Zeolite>

The proton type zeolite usable in the present invention may be a natural product or a synthetic product. Examples thereof are mordenite, erionite, ferrierite, chabazite, X type zeolite, β type zeolite, MFI type zeolite, Y type zeolite, and SAPO. The zeolites that can be used in the present invention are not only proton type (H type) ones, but also ion exchange type zeolites ion-exchanged with Cu, Co or Fe ions. A mixture of one or more of these zeolites may be used.

The first proton type zeolite or the first ion exchange type zeolite used in the lower layer, and the second proton type zeolite or the second ion exchange type zeolite of the upper layer may be the same or different. Both of them are preferably Cu ion exchange type zeolites.

The content of the proton type zeolite or the ion exchange type zeolite contained in the lower layer is preferably 40% by weight or more, but 95% by weight or less, more preferably 50% by weight or more, but 90% by weight or less, based on the total weight of the noble metal, inorganic oxide, phosphorus and zeolite contained in the lower layer. The amount of the proton type zeolite or the ion exchange type zeolite contained in the lower layer, which has been supported, is preferably 5 g/L or more, but 95 g/L or less, more preferably 10 g/L or more, but 90 g/L or less, based on the volume of the catalyst. If the above parameters are within these ranges, more satisfactory results are obtained in connection with the ammonia decomposition rate, the $NO_x$ formation rate, and the $N_2O$ formation rate.

The amount of the proton type zeolite or the ion exchange type zeolite contained in the upper layer, which has been supported, is preferably 20 g/L or more, but 150 g/L or less, more preferably 30 g/L or more, but 130 g/L or less, based on the volume of the catalyst. If the supported amount is within these ranges, more satisfactory results are obtained in connection with the ammonia decomposition rate, the $NO_x$ formation rate, and the $N_2O$ formation rate.

The content of the proton type zeolite or the ion exchange type zeolite contained in the upper layer is preferably 20% by weight or more, but 400% by weight or less, more preferably 40% by weight or more, but 300% by weight or less, based on the total weight of the noble metal, inorganic oxide, phosphorus and zeolite contained in the lower layer. If the content is within these ranges, more satisfactory results are obtained in connection with the ammonia decomposition rate, the $NO_x$ formation rate, and the $N_2O$ formation rate.

<Copper oxide>

A copper oxide can be further incorporated into the lower layer of the ammonia decomposition catalyst of the present invention. The copper oxide refers to an oxide containing copper, and includes a copper-containing composite oxide. Examples of the copper oxide are copper oxides represented by compositions of the general formula $CuO_x$ ($0.45 \leq X \leq 1.1$). Typically, they are CuO and $Cu_2O$, and include copper oxides present as copper-containing composite oxides such as hopcalite.

The copper oxide in the catalyst of the present invention acts to maintain the decomposition activity and the $N_2$ selection rate. Its content is preferably 1% by weight or more, but 30% by weight or less, more preferably 5% by weight or more, but 10% by weight or less, based on the total weight of the noble metal, inorganic oxide, phosphorus and zeolite contained in the lower layer. If the proportion of the copper oxide is less than 1% by weight, the formation of $NO_x$, etc. increases, with the result that the $N_2$ selection rate may lower. If the proportion of the copper oxide exceeds 30% by weight, on the other hand, the proportion of zeolite becomes relatively low, and the decomposition rate declines. The amount of the copper oxide supported is preferably 0.5 g/L or more, but 20 g/L or less, more preferably 5 g/L or more, but 10 g/L or less, based on the volume of the catalyst. If the above parameters are within these ranges, more satisfactory results can be obtained in connection with the $NO_x$ formation rate, the $N_2O$ selection rate and the ammonia decomposition rate.

The copper oxide is uniformly mixed in the catalyst, together with the zeolite and the inorganic oxide. Under the coexistence of particles of other components, the copper oxide exhibits a catalytic action. From the aspect of uniform dispersion with other components, the average particle size of the copper oxide is preferably 0.1 $\mu$m or more, but 100 $\mu$m or less. The definitions of the particle size and the average particle size are as described earlier.

As a means for incorporating the copper oxide into the catalyst, it is particularly preferred to use solid particles of the above-mentioned copper oxide as a starting material. Another means is exemplified by mixing an aqueous solution, which contains a compound containing copper, for example, a copper salt such as copper sulfate or copper acetate, with other catalyst components to impregnate the catalyst with such a mixture, and calcining the catalyst at 300 to 600°C in an air atmosphere, thereby converting the copper salt into a copper oxide.

The relative proportion (weight ratio) of the noble metal, inorganic oxide, phosphorus and proton type zeolite or ion exchange type zeolite in the lower layer is preferably noble metal : inorganic oxide : phosphorus: proton type zeolite or ion exchange type zeolite = 0.05 to 5 : 5 to 50 : 0.1 to 10 : 40 to 95.

<Structure of catalyst>

The ammonia decomposition catalyst of the present invention has a two-layer structure. The lower layer has the noble metal, the inorganic oxide, phosphorus, and the first proton type zeolite or the first ion exchange type zeolite, while the upper layer has the second proton type zeolite or the second ion exchange type zeolite. By having such a two-layer structure, the ammonia decomposition catalyst of the present invention shows a high $NH_3$ decomposition rate, suppresses $NO_x$ highly, and inhibits the formation of $N_2O$ as a by-product, even when used for a high moisture content ammonia exhaust gas.

The thickness of the lower layer is preferably 10 to 200 $\mu$m, more preferably 30 to 100 $\mu$m.

The thickness of the upper layer is preferably 10 to 200 $\mu$m, more preferably 30 to 100 $\mu$m.

<Support>

The catalyst of a two-layer structure according to the present invention can have a support further provided on a surface of the lower layer opposite to the side of the upper layer. The shape of the support used is not limited, but is preferably a shape in which a differential pressure produced during gas passage is low and the area of contact with the gas is large. The preferred shape includes a honeycomb, a sheet, a mesh, fibers, a pipe, and a filter. The materials for the support are not limited, and include, for example, publicly known catalyst carriers such as cordierite and alumina, carbon fibers, metal fibers, glass fibers, ceramic fibers, and metals such as titanium, aluminum, and stainless steel.

In shaping the catalyst of the present invention or supporting it on the support, an inorganic binder or an organic binder can be mixed and used, as appropriate. Examples of the inorganic binder are colloidal silica, silica sol, alumina sol, silicic acid sol, titania sol, boehmite, white clay, kaolin, and sepiolite.

<Method for producing catalyst>

In connection with a method for producing the ammonia decomposition catalyst of the present invention, an embodiment will be described below. However, the method for production is not limited to the following method:

<Production of lower layer>

First of all, an aqueous solution containing a noble metal is charged into a container, and an inorganic oxide is added. After the inorganic oxide is sufficiently impregnated with the noble metal-containing aqueous solution, the mixture is heated with stirring to evaporate water to dryness. Then, the system is further heated in a dryer, and the resulting powder is calcined in air to obtain inorganic oxide particles supporting the noble metal (as a metal content) in a predetermined amount.

The resulting particles are mixed with deionized water, and a predetermined amount of silica sol and a first proton type zeolite or a first ion exchange type zeolite are blended into the mixture to prepare a slurry composition for a lower layer. The slurry is coated on a support, and the excess slurry is blown off using an air blow. Then, the coated slurry is heated to dryness, and further calcined using a high temperature furnace in an air stream to obtain a catalyst for a lower layer.

A method for incorporating phosphorus into the lower layer is as follows: First, a solution of a phosphorus-containing compound and deionized water are mixed to prepare a phosphorus solution. Then, this solution is coated on the above pre-produced lower layer catalyst containing the noble metal, the inorganic oxide, and the first proton type zeolite or the first ion-exchange type zeolite, and the excess solution is blown off by an air blow. Then, the coating is subjected to drying and calcining.

In this manner, the lower layer of the ammonia decomposition catalyst according to the present invention can be obtained.

It is to be noted that the ammonia exhaust gas treatment catalyst of the present invention can have a copper oxide further incorporated into the lower layer.

<Production of upper layer>

Deionized water, a predetermined amount of silica sol (e.g., SNOWTEX C, produced by NISSAN CHMICAL INDUSTRIES, LTD.), and the second proton type zeolite or the second ion exchange type zeolite are mixed to prepare a slurry for an upper layer. This slurry is coated on the lower layer prepared above, and the excess slurry is blown off by an air blow. Then, the coating is subjected to drying and calcining in the same manner as above. An ammonia decomposition catalyst according to the present invention, composed of two layers, is obtained thereby.

The phosphorus is concentrated within the lower layer on the side of the upper layer. That is, the content of the phosphorus is configured to be sequentially decreased or progressively decreased, with the highest content being at the top of the lower layer.

The present invention also relates to a method for treating a moisture-containing ammonia exhaust gas. This treatment method includes a step of bringing the ammonia decomposition catalyst of a two-layer structure obtained above into contact with an ammonia exhaust gas to decompose ammonia into nitrogen and water.

The ammonia exhaust gas, on which the ammonia decomposition catalyst of the present invention is used, is not limited, if ammonia is contained in the exhaust gas. Examples of the exhaust gas are ammonia-containing exhaust gases from various factories such as semiconductor plants, coke oven exhaust gases, leak ammonia-containing gases from a flue gas denitration process, and exhaust gases produced by stripping ammonia-containing drainage from sewage treatment facilities, sludge treatment facilities, etc.

The ammonia exhaust gas is, for example, an ammonia exhaust gas with a moisture concentration of 10% by volume or more, particularly, a moisture concentration of 20 to 50% by volume.

The ammonia concentration of the ammonia exhaust gas, to which the present invention can be applied, is 10 ppm by volume to 5% by volume, for example. The ammonia exhaust gas and air are contacted with the catalyst of the present invention to convert ammonia into a harmless nitrogen gas and water for oxidative decomposition. The temperature of this oxidative decomposition is determined, as appropriate, by the properties of the exhaust gas (water vapor concentration, ammonia concentration), the reaction conditions (temperature, space velocity), the degree of deterioration of the catalyst, and so forth. Usually, it is suitable to select the oxidative decomposition temperature from a temperature range of 200 to 500°C, preferably 250 to 450°C.

The space velocity (SV) of the exhaust gas to be treated with respect to the catalyst may be selected, as appropriate, from the range of 100 to 100,000 $hr^{-1}$ in consideration of, for example, the nature of the gas (ammonia concentration, moisture concentration) and the target value of the ammonia decomposition rate.

The concentration of ammonia in the gas to be supplied to a catalyst reactor is preferably adjusted to 3% by volume or less, preferably 2% by volume or less. If the concentration of ammonia exceeds 3% by volume, heat generation by the reaction raises the temperature of the catalyst layer so highly that the catalyst is prone to deterioration.

If the exhaust gas, which does not contain a sufficient amount of oxygen for the decomposition reaction, is to be treated, it is recommendable to incorporate air or an oxygen-containing gas into the exhaust gas from outside so that the ratio of the amount of oxygen to the theoretically required amount of oxygen is 1.03 to 10.0, preferably 1.1 to 5.0, at the inlet of the catalyst reactor. The theoretically required amount of oxygen is a stoichiometric amount of oxygen which is obtained from Formula (1), where when the concentration of ammonia at the inlet of the reactor is 1.0% by volume, the concentration of oxygen is 0.77 to 7.5% by volume, preferably 0.83 to 3.8% by volume.

$$4NH_3 + 3O_2 \rightarrow 6H_2O + 2N_2 \ldots \qquad (1)$$

An example of the exhaust gas from sewage treatment facilities will be described below.

Sludge in the sewage treatment facilities is dehydrated using a dehydrator, and the resulting waste water is distilled by distillation equipment. If desired, a separator is further provided for blowing steam or steam and a nitrogen gas from outside into the system to promote the evaporation of moisture and ammonia. A water vapor containing ammonia, which has been separated by distillation, is separated into water and ammonia in a separation tank, and waste heat is recovered. Then, a vapor containing high concentration moisture and ammonia (an ammonia exhaust gas) is introduced into the catalyst reactor, while a necessary amount of air is introduced separately from outside. Upon contact with the catalyst, ammonia is decomposed into nitrogen and a water vapor for detoxification treatment. The outlines of this process are described, for example, in a patent document, JP-A-2002-28637.

The catalyst of the present invention is preferably applied to the treatment of an exhaust gas resulting from activated sludge treatment. The exhaust gas has a composition harsh to the catalyst, such as a moisture concentration of 20 to 70% by volume, a sulfur compound content (as S content) of 10 to 200 ppm by volume, an ammonia content of 100 ppm to 3% by volume, and the remainder being nitrogen. That is, the exhaust gas for which the catalyst of the present invention exhibits a particularly effective action is a gas substantially consisting essentially of a water vapor and nitrogen aside from ammonia. The catalyst of the present invention is also used particularly preferably for the treatment of ammonia in an exhaust gas containing sulfur compounds. The exhaust gas discharged from the activated sludge treatment is an example and, needless to say, is not limitative. It goes without saying that the catalyst of the present invention is also usable for other treatments, such as the treatment of an ordinary ammonia exhaust gas essentially comprising air.

EXAMPLES

The present invention will now be described in further detail by Examples. It is to be noted, however, that the present invention is in no way limited thereto.

(Preparation of catalyst)

<Catalyst A-1>

In an evaporating dish, a $TiO_2$ powder (a product of ISHIHARA SANGYO KAISHA, LTD., average particle size 1 $\mu$m, BET specific surface area 60 m$^2$/g) was added to an aqueous solution of dinitrodiaminoplatinum (Pt concentration 4.5% by weight) to impregnate the $TiO_2$ powder with the aqueous solution sufficiently. Then, the mixture was stirred at a temperature of 80 to 90°C to evaporate the water to dryness. Then, the system was further heated to 150°C in a dryer. The resulting powder was calcined for 1 hour at a temperature of 500°C in air to obtain $TiO_2$ particles having 5.0% by weight of Pt (as metal content) supported thereon (designated as Pt(5.0)/$TiO_2$). This powder and 64.4 g of deionized water were mixed to form a slurry material. This slurry material, 249 g of silica sol (produced by NISSAN CHEMICAL INDUSTRIES, LTD., SNOWTEX-C), and 142.3 g of Cu ion exchange $\beta$ zeolite (produced by Clariant Catalysts (Japan) K.K., may hereinafter be written as "Cu$\beta$") were mixed to prepare a slurry for a lower layer. This lower layer slurry was coated on a cordierite honeycomb 200-cell support (number of cells: 200 cells/square inch, length 50 mm x width 50 mm x height 50 mm, volume 0.125 liter), and the excess slurry was blown off by an air blow. Then, the coating was dried for 4 hours in a dryer at 150°C, and further calcined for 4 hours at 500°C in a high temperature furnace, with air being flowed therethrough, to obtain a catalyst for a lower layer. On this occasion, the amount of Pt was 0.5 g, and the amount of Cu ion exchange $\beta$ zeolite was 70 g, per liter of the catalyst.

Then, 50 g of an 85% phosphoric acid solution and 500 g of deionized water were mixed to prepare a phosphorus solution. This solution was coated on the above catalyst for a lower layer, and the excess solution was blown off by an air blow. Then, the coating was subjected to drying and calcining in the same manner as described above to obtain a lower layer catalyst. The amount of phosphorus supported on this occasion was 1.0 g per liter of the catalyst.

Then, 64.4 g of deionized water, 249 g of silica sol (produced by NISSAN CHEMICAL INDUSTRIES, LTD., SNOWTEX-C), and 142.3 g of Cu ion exchange β zeolite (produced by Clariant Catalysts (Japan) K.K.) were mixed to prepare a slurry for an upper layer (Cuβ slurry). This slurry was coated on the lower layer catalyst, and the excess slurry was blown off by an air blow. Then, the coating was subjected to drying and calcining in the same manner as described above to obtain Catalyst A-1 of a two-layer structure. On this occasion, the amount of the Cu ion exchange β zeolite supported in the upper layer was 80 g per liter of the catalyst volume.

<Catalyst A-2>

Preparation was performed in the same manner as for Catalyst A-1, except that the amount of Pt was changed from Pt(5.0)/TiO$_2$ to Pt(2.0)/TiO$_2$, whereby Catalyst A-2 was obtained.

<Catalyst A-3>

Preparation was performed in the same manner as for Catalyst A-2, except that the TiO$_2$ of Catalyst A-2 was changed to ZrO$_2$ (produced by DAIICHI KIGENSO KAGAKU KOGYO CO., LTD.), whereby Catalyst A-3 was obtained.

<Catalyst A-4>

Preparation was performed in the same manner as for Catalyst A-2, except that the TiO$_2$ of Catalyst A-2 was changed to CeZrO$_2$ (produced by DAIICHI KIGENSO KAGAKU KOGYO CO., LTD.), whereby Catalyst A-4 was obtained.

<Catalysts A-5, A-6>

Preparation was performed in the same manner as for Catalyst A-1, except that the content of the Cu ion exchange β zeolite in the slurry for a lower layer for Catalyst A-1 was decreased, and the amounts of the Cu ion exchange β zeolite supported per unit volume were changed to 20 g/liter and 40 g/liter, respectively, whereby Catalysts A-5 and A-6 were obtained.

<Catalysts A-7, A-8>

Preparation was performed in the same manner as for Catalyst A-1, except that the supported amounts of the slurry for an upper layer (Cuβ slurry) for Catalyst A-1 were adjusted to set the amounts supported per unit volume at 40 g/liter and 120 g/liter, respectively, whereby Catalysts A-7 and A-8 were obtained.

<Catalyst D-1>

In an evaporating dish, a TiO$_2$ powder (produced by ISHIHARA SANGYO KAISHA, LTD., average particle size 1 μm, BET specific surface area 60 m$^2$/g) was added to an aqueous solution of dinitrodiaminoplatinum (Pt concentration 4.5% by weight) to impregnate the TiO$_2$ powder with the aqueous solution sufficiently. Then, the mixture was stirred at a temperature of 80 to 90°C to evaporate the water to dryness. Then, the system was further heated to 150°C in a dryer. The resulting powder was calcined for 1 hour at a temperature of 500°C in air to obtain TiO$_2$ particles having 5.0% by weight of Pt (as metal content) supported thereon (designated as Pt(5.0)/TiO$_2$). This powder and 64.4 g of deionized water were mixed to form a slurry material. This slurry material, 249 g of silica sol (produced by NISSAN CHEMICAL INDUSTRIES, LTD., SNOWTEX-C), and 142.3 g of Cu ion exchange SAPO-34 zeolite ((produced by UOP K.K., may hereinafter be written as "CuSAPO") were mixed to prepare a slurry for a lower layer. This slurry for a lower layer was coated on a cordierite honeycomb 200-cell support (number of cells: 200 cells/square inch, length 50 mm x width 50 mm x height 50 mm, volume 0.125 liter), and the excess slurry was blown off by an air blow. Then, the coating was dried for 4 hours in a dryer at 150°C, and further calcined for 4 hours at 500°C in a high temperature furnace, with air being flowed therethrough, to obtain a catalyst for a lower layer. On this occasion, the amount of Pt was 0.5 g, and the amount of Cu ion exchange SAPO-34 zeolite was 70 g, per liter of the catalyst.

Then, 50 g of an 85% phosphoric acid solution and 500 g of deionized water were mixed to prepare a phosphorus solution. This solution was coated on the above catalyst for a lower layer, and the excess solution was blown off by an air blow. Then, the coating was subjected to drying and calcining in the same manner as described above to obtain a lower layer catalyst. The amount of phosphorus supported on this occasion was 1.0 g per liter of the catalyst.

Then, 64.4 g of deionized water, 249 g of silica sol (produced by NISSAN CHEMICAL INDUSTRIES, LTD., SNOWTEX-C), and 142.3 g of Cu ion exchange SAPO-34 zeolite (produced by UOP K.K.) were mixed to prepare a slurry for an upper layer (CuSAPO slurry). This slurry was coated on the lower layer catalyst, and the excess slurry was blown off by an air blow. Then, the coating was subjected to drying and calcining in the same manner as described above to obtain Catalyst D-1 of a two-layer structure. On this occasion, the amount of the Cu ion exchange SAPO-34 zeolite supported in the upper layer was 80 g per liter of the catalyst volume.

<Comparative Catalyst B-1>

A Pt(5.0)/TiO$_2$ powder, deionized water, and silica sol were mixed to form a slurry. This slurry was coated on a cordierite honeycomb 200-cell support, and the excess slurry was blown off by an air blow. Then, the coating was dried for 4 hours in a dryer at 150°C, and further calcined for 4 hours at 500°C in a high temperature furnace, with air being flowed therethrough, to obtain Comparative Catalyst B-1.

<Comparative Catalyst B-2>

A Pt(5.0)/TiO$_2$ powder, deionized water, silica sol, and Cu ion exchange β zeolite were mixed to form a slurry. This slurry was coated on a cordierite support, dried, and calcined in the same manner as for Comparative Example B-1, to obtain Comparative Catalyst B-2.

<Comparative Catalyst B-3>

A Pt(5.0)/TiO$_2$ powder, deionized water, silica sol, and Cu ion exchange β zeolite were mixed to form a slurry. This slurry was coated on a cordierite support, dried, and calcined in the same manner as for Comparative Example B-1, to obtain a first layer catalyst.
Then, 50 g of an 85% phosphoric acid solution and 500 g of deionized water were mixed to prepare a phosphorus solution. This solution was coated on the first layer catalyst prepared above, and the excess solution was blown off by an air blow. Then, the coating was dried and calcined in the same manner as described above, to obtain Comparative Catalyst B-3.

<Comparative Catalyst B-4>

Deionized water (64.4 g), 249 g of silica sol (produced by NISSAN CHEMICAL INDUSTRIES, LTD., SNOWTEX-C), and 142.3 g of Cu ion exchange β zeolite (produced by Clariant Catalysts (Japan) K.K.) were mixed to prepare a slurry. This slurry was coated on Comparative Catalyst B-2, and the excess slurry was blown off by an air blow. Then, drying and calcining were performed in the same manner as described above, to obtain Comparative Catalyst B-4.

<Comparative Catalyst B-5>

A slurry for an upper layer (Cuβ slurry) was coated on Comparative Catalyst B-1, and drying and calcining were performed in the same manner as for Comparative Catalyst B-4, to obtain Comparative Catalyst B-5. On this occasion, the amount of coating was adjusted so that the amount of the Cu ion exchange β zeolite supported in the upper layer would be 70 g per liter of the catalyst volume.
Comparative Catalyst B-1 is a catalyst containing Pt and titanium oxide. Comparative Catalyst B-2 is a catalyst having Cu ion exchange β zeolite further added to the components of Comparative Catalyst B-1. Comparative Catalyst B-3 is a catalyst having phosphorus further added to Comparative Catalyst B-2, and is a catalyst containing components corresponding to those in Patent Document 8. Comparative Catalyst B-4 has a lower layer, which is a catalyst containing the catalyst components of Comparative Catalyst B-2, and has an upper layer which contains the same component as that of the upper layer of the present invention. Comparative Catalyst B-5 has a lower layer, which is a catalyst containing the catalyst components of Comparative Catalyst B-1, and has an upper layer which contains the same component as that of the upper layer of the present invention.

<Conventional Catalyst C-4>

Conventional Catalyst C-4 is a catalyst according to prior art described in WO2006/006702 (a catalyst containing Pt=0.03; 10-TiO2; CuO=10; H-mordenite (catalyst composition 110 g/liter)).
Table 1 shows the composition of each catalyst (not including the support).

[Table 1]

Table 1

| Catalyst No. | Catalyst composition (g/L) | | | | | |
|---|---|---|---|---|---|---|
| | Lower layer | | | | | Upper layer |
| | Pt | Inorganic oxide | | Cuβ | P | Cuβ |
| | | Type | Concentration | | | |
| A-1 | 0.5 | TiO$_2$ | 10 | 70 | 1 | 80 |
| A-2 | 0.2 | TiO$_2$ | 10 | 70 | 1 | 80 |
| A-3 | 0.2 | ZrO$_2$ | 10 | 70 | 1 | 80 |
| A-4 | 0.2 | CeZrO$_2$ | 10 | 70 | 1 | 80 |
| A-5 | 0.5 | TiO$_2$ | 10 | 20 | 1 | 80 |
| A-6 | 0.5 | TiO$_2$ | 10 | 40 | 1 | 80 |
| A-7 | 0.5 | TiO$_2$ | 10 | 70 | 1 | 40 |
| A-8 | 0.5 | TiO$_2$ | 10 | 70 | 1 | 120 |
| B-1 | 0.5 | TiO$_2$ | 10 | - | - | - |
| B-2 | 0.5 | TiO$_2$ | 10 | 70 | - | - |
| B-3 | 0.5 | TiO$_2$ | 10 | 70 | 1 | - |
| B-4 | 0.5 | TiO$_2$ | 10 | 70 | - | 80 |
| B-5 | 0.5 | TiO$_2$ | 10 | - | - | 70 |
| C-4 | 0.03 | TiO$_2$ | 10 | Mordenite 70 Copper oxide 10 | - | - |
| D-1 | 0.5 | TiO$_2$ | 10 | CuSAPO 70 | 1 | CuSAPO 80 |

<Activity evaluation test>

A columnar (diameter 21 mm, length 50 mm) honeycomb type catalyst was extracted from the honeycomb type catalyst obtained above, and charged into a flow-through reactor. A predetermined amount of a gas was passed through the reactor, with its flow rate being controlled by a mass flow controller. The catalyst was heated with an electric furnace to bring the temperature at the inlet of the catalyst (inlet temperature) to a predetermined temperature, and the ammonia decomposition activity of the catalyst was evaluated.

Gas conditions:

SV = 10,000 h$^{-1}$, NH$_3$ = 1%, H$_2$O = 30%, balance being air

<Methods for analysis of gas>

Ammonia: Gas chromatography (TCD detector) or gas detecting tube
NO$_x$: Chemiluminescence analyzer
N$_2$O: Gas chromatography (TCD detector)

<Calculations>

$$\text{NH}_3 \text{ decomposition rate (\%): } 100 - \{(\text{outlet NH}_3 \text{ concentration})/(\text{inlet NH}_3 \text{ concentration}) \times 100\}$$

$NO_x$ formation rate (%): (outlet $NO_x$ concentration)/(inlet $NH_3$ concentration) x 100

$N_2O$ formation rate (%): {(outlet $N_2O$ concentration)/(inlet $NH_3$ concentration)} x 100

$N_2$ selection rate (%): 100 - {(100 - $NH_3$ decomposition rate) + $NO_x$ formation rate + $N_2O$ formation rate x 2}

The performance test conditions and the results of performance measurements are shown in Table 2 below.

[Table 2]

Table 2

| Catalyst No. | Conditions for performance measurements | | | | Results of performance measurements | | | |
|---|---|---|---|---|---|---|---|---|
| | inlet temp. | SV | moisture | $NH_3$ conc. | $NH_3$ decomp. rate | $NO_x$ form. rate | $N_2O$ form. rate | $N_2$ select. rate |
| | °C | $h^{-1}$ | % | ppm | % | % | % | % |
| A-1 | 340 | 10000 | 2 | 10000 | >99.99% | 0.05% | 2.7% | 94.5% |
| A-1 | 340 | 10000 | 10 | 10000 | >99.99% | 0.03% | 2.6% | 94.8% |
| A-1 | 340 | 10000 | 15 | 10000 | >99.99% | 0.03% | 2.5% | 94.9% |
| A-1 | 340 | 10000 | 20 | 10000 | >99.99% | 0.03% | 2.5% | 95.0% |
| A-1 | 340 | 10000 | 30 | 10000 | >99.99% | 0.03% | 2.4% | 95.2% |
| A-1 | 340 | 10000 | 50 | 10000 | >99.99% | 0.02% | 2.1% | 95.8% |
| A-1 | 340 | 10000 | 30 | 1000 | >99.99% | 0.12% | 3.2% | 93.4% |
| A-1 | 340 | 10000 | 30 | 7000 | >99.99% | 0.03% | 2.4% | 95.2% |
| A-1 | 340 | 10000 | 30 | 10000 | >99.99% | 0.03% | 2.4% | 95.2% |
| A-1 | 340 | 10000 | 30 | 13000 | >99.99% | 0.03% | 2.2% | 95.5% |
| A-1 | 340 | 10000 | 30 | 17000 | >99.99% | 0.03% | 1.8% | 96.4% |
| A-1 | 340 | 7200 | 30 | 10000 | >99.99% | 0.03% | 2.5% | 95.0% |
| A-1 | 340 | 15000 | 30 | 10000 | >99.99% | 0.05% | 2.4% | 95.2% |
| A-1 | 300 | 10000 | 30 | 10000 | 99.62% | 0.05% | 1.0% | 97.9% |
| A-1 | 320 | 10000 | 30 | 10000 | >99.99% | 0.02% | 2.0% | 95.9% |
| A-1 | 340 | 10000 | 30 | 10000 | >99.99% | 0.03% | 2.4% | 95.2% |
| A-1 | 360 | 10000 | 30 | 10000 | >99.99% | 0.06% | 2.5% | 94.9% |
| A-1 | 380 | 10000 | 30 | 10000 | >99.99% | 0.06% | 2.6% | 94.7% |
| A-1 | 400 | 10000 | 30 | 10000 | >99.99% | 0.08% | 1.8% | 96.4% |
| A-2 | 320 | 10000 | 30 | 10000 | 99.98% | 0.02% | 1.1% | 97.8% |

(continued)

| Catalyst No. | Conditions for performance measurements | | | | Results of performance measurements | | | |
|---|---|---|---|---|---|---|---|---|
| | inlet temp. | SV | moisture | NH₃ conc. | NH₃ decomp. rate | NOₓ form. rate | N₂O form. rate | N₂ select. rate |
| | °C | h⁻¹ | % | ppm | % | % | % | % |
| A-2 | 340 | 10000 | 30 | 10000 | >99.99% | 0.02% | 1.6% | 96.7% |
| A-3 | 320 | 10000 | 30 | 10000 | >99.99% | 0.02% | 3.0% | 94.0% |
| A-3 | 340 | 10000 | 30 | 10000 | >99.99% | 0.03% | 2.6% | 94.7% |
| A-4 | 320 | 10000 | 30 | 10000 | >99.99% | 0.02% | 1.3% | 97.3% |
| A-4 | 340 | 10000 | 30 | 10000 | >99.99% | 0.02% | 1.5% | 96.9% |
| A-5 | 320 | 10000 | 30 | 10000 | >99.99% | 0.06% | 5.7% | 88.6% |
| A-5 | 340 | 10000 | 30 | 10000 | >99.99% | 0.10% | 5.9% | 88.1% |
| A-6 | 320 | 10000 | 30 | 10000 | >99.99% | 0.09% | 4.2% | 91.5% |
| A-6 | 340 | 10000 | 30 | 10000 | >99.99% | 0.12% | 4.7% | 90.5% |
| A-7 | 320 | 10000 | 30 | 10000 | >99.99% | 0.38% | 3.9% | 91.8% |
| A-7 | 340 | 10000 | 30 | 10000 | >99.99% | 0.54% | 4.3% | 90.9% |
| A-8 | 320 | 10000 | 30 | 10000 | >99.99% | 0.02% | 3.4% | 93.2% |
| A-8 | 340 | 10000 | 30 | 10000 | >99.99% | 0.02% | 3.6% | 92.9% |
| B-1 | 340 | 10000 | 30 | 10000 | >99.99% | 9.92% | 16.7% | 56.8% |
| B-2 | 340 | 10000 | 30 | 10000 | >99.99% | 2.10% | 6.6% | 84.8% |
| B-3 | 340 | 10000 | 30 | 10000 | >99.99% | 1.80% | 4.9% | 88.4% |
| B-4 | 320 | 10000 | 30 | 10000 | >99.99% | 0.15% | 5.3% | 89.3% |
| B-4 | 340 | 10000 | 30 | 10000 | >99.99% | 0.24% | 6.9% | 86.1% |
| B-5 | 340 | 10000 | 30 | 10000 | >99.99% | 0.38% | 13.6% | 72.4% |
| C-4 | 340 | 10000 | 30 | 10000 | >99.99% | 0.10% | 1.0% | 98.0% |
| D-1 | 300 | 10000 | 30 | 10000 | >99.99% | 0.01% | 4.0% | 91.9% |
| D-1 | 320 | 10000 | 30 | 10000 | >99.99% | 0.02% | 4.3% | 91.4% |
| D-1 | 340 | 10000 | 30 | 10000 | >99.99% | 0.03% | 4.2% | 91.7% |
| D-1 | 360 | 10000 | 30 | 10000 | >99.99% | 0.04% | 3.8% | 92.3% |

(Note: List of abbreviations in Table 2) Inlet temp.: Inlet temperature NH₃ conc.: NH₃ concentration NH₃ decomp. rate: NH₃ decomposition rate NOₓ form. rate: NOₓ formation rate N₂O form. rate: N₂O formation rate N₂ select, rate: N₂ selection rate

As clear from the results in Table 2, the catalysts of the present invention (A-1 to A-8) having the components of Comparative Catalyst B-3 as the lower layer and having the upper layer containing a denitration component show a high NH₃ decomposition rate, exhibit an NOₓ formation rate of 0.6% or less, suppress an N₂O formation rate, and have a markedly high N₂ selection rate, in response to an ammonia exhaust gas containing high moisture (30%). The catalyst of the present invention (D-1) containing CuSAPO as the zeolite component of the upper and lower layers is similarly found to show a high NH₃ decomposition rate, exhibit an NOₓ formation rate of 0.6% or less, suppress an N₂O formation rate, and have a markedly high $N_2$ selection rate, for an ammonia exhaust gas containing high moisture (30%).

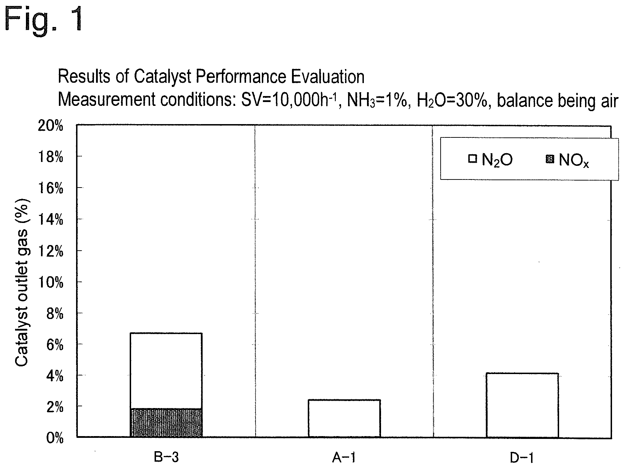

Comparative Catalyst B-3 corresponding only to the lower layer of the present invention, by contrast, shows an $NO_x$ formation rate as high as 1.80% and a low $N_2$ selection rate (see Fig. 1). These findings show that the catalyst comprising the lower layer combined with the upper layer containing the denitration component (Cu ion exchange β zeolite) achieved the unpredictable effects of lowering the $NO_x$ formation rate to 0.6% or less, suppressing the $N_2O$ formation rate, and markedly increasing the $N_2$ selection rate. The results with Comparative Catalysts B-4 to B-5, on the other hand, are a low $NO_x$ formation rate, but a relatively high $N_2O$ formation rate, and a relatively low $N_2$ selection rate. As these results demonstrate, even when a catalyst containing the same denitration component (Cu ion exchange β zeolite) as in the present invention is combined as the upper layer with the lower layer, desired effects are not produced, unless a noble metal, an inorganic oxide, phosphorus, and a first proton type zeolite or a first ion exchange type zeolite ion-exchanged with Cu, Co or Fe ions are contained in the lower layer.

<Durability test>

Durability tests were conducted using Catalysts A-1 and D-1. Evaluation tests were conducted in the same manner as for the above-mentioned activity evaluation tests. In the tests, the inlet temperature was set at 340°C for A-1, and set at 250°C and 340°C for D-1. The gas conditions were SV=5,000h$^{-1}$ for A-1, 10,000h$^{-1}$ for D-1, NH$_3$=1% (10,000 ppm), $H_2O$=30%, the balance being air. The test period was 13,000 hours.

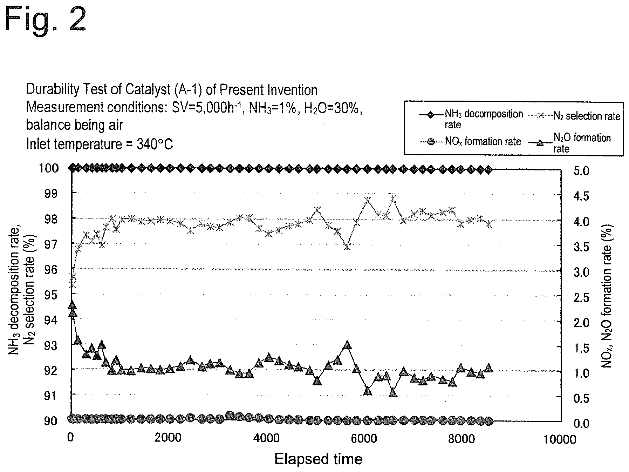

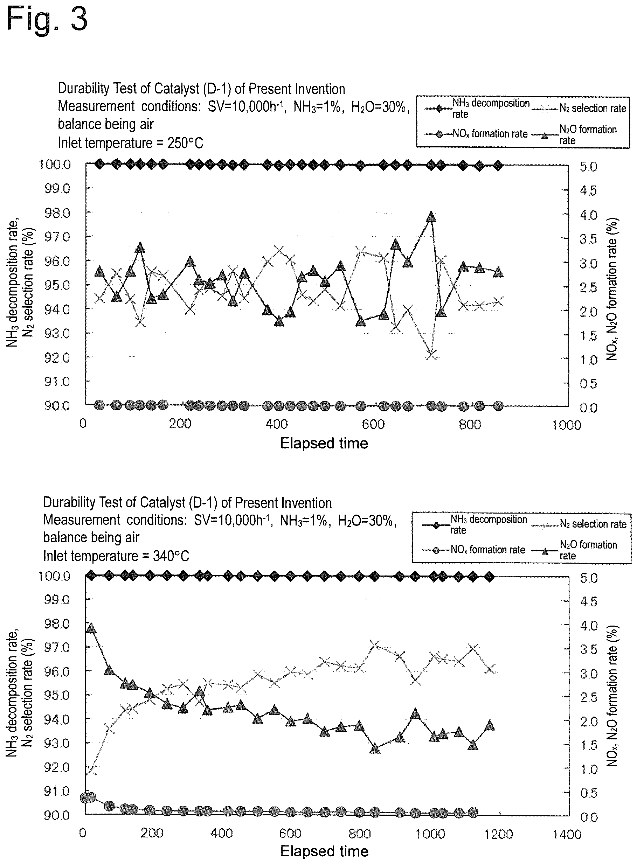

The results are shown in Table 3, Fig. 2 and Fig. 3.

[Table 3]

Table 3

| | Conditions for performance measurements | | | | Results of performance measurements | | | | |
|---|---|---|---|---|---|---|---|---|---|
| | inlet temp. | SV | moisture | NH$_3$ conc. | Elapsed time | NH$_3$ decomp. rate | NO$_x$ form. rate | N$_2$O form. rate | N$_2$ select. rate |
| | °C | h$^{-1}$ | % | ppm | Hr | % | % | % | % |
| A-1 | 340 | 10000 | 30 | 10000 | initial stage | >99.99% | 0.04% | 2.98% | 94.5% |
| | 340 | 10000 | 30 | 10000 | 3400 | >99.99% | 0.09% | 1.22% | 97.3% |
| | 340 | 10000 | 30 | 10000 | 8500 | >99.99% | 0.01% | 1.40% | 96.7% |
| D-1 | 340 | 10000 | 30 | 10000 | initial stage | >99.99% | 0.34% | 3.90% | 91.9% |
| | 340 | 10000 | 30 | 10000 | 600 | >99.99% | 0.07% | 1.97% | 96.0% |
| | 340 | 10000 | 30 | 10000 | 1100 | >99.99% | 0.06% | 1.48% | 97.0% |
| D-1 | 250 | 10000 | 30 | 10000 | initial stage | >99.99% | 0.00% | 2.78% | 94.4% |
| | 250 | 10000 | 30 | 10000 | 500 | >99.99% | 0.00% | 2.58% | 94.8% |
| | 250 | 10000 | 30 | 10000 | 800 | >99.99% | 0.00% | 2.88% | 94.2% |
| (Note: List of abbreviations in Table 3) Inlet temp.: Inlet temperature NH$_3$ conc.: NH$_3$ concentration NH$_3$ decomp. rate: NH$_3$ decomposition rate NO$_x$ form. rate: NO$_x$ formation rate N$_2$O form. rate: N$_2$O formation rate N$_2$ select. rate: N$_2$ selection rate | | | | | | | | | |

Based on the above results, even after a lapse of 8500 hours, A-1 showed no deterioration of the catalyst,

exhibited a high $NH_3$ decomposition rate, showed an $NO_x$ formation rate of 0.6% or less, suppressed an $N_2O$ formation rate, and maintained an $N_2$ selection rate at a markedly high level. At an inlet temperature of 250°C, D-1 showed no deterioration of the catalyst, exhibited a high $NH_3$ decomposition rate, and showed an $NO_x$ formation rate of 0.6% or less, even after a lapse of 800 hours even at such a low inlet temperature. At an inlet temperature of 340°C, D-1 showed no deterioration of the catalyst, exhibited a high $NH_3$ decomposition rate, showed an $NO_x$ formation rate of 0.6% or less, suppressed an $N_2O$ formation rate, and maintained an $N_2$ selection rate at a markedly high level, even after a lapse of 1000 hours.

<Durability comparison test>

A durability test of a prior art catalyst (C-4: a catalyst containing Pt=0.03; 10-$TiO_2$; CuO=10; H-mordenite (catalyst composition g/liter)) was conducted, and the results were compared with those with the catalyst of the present invention (A-1). Evaluation tests were conducted in the same manner as for the aforementioned activity evaluation tests. In the tests, the inlet temperature was set at 340°C. The gas conditions were SV=5,000h$^{-1}$, $NH_3$=1%, $H_2O$=30%, the balance being air.

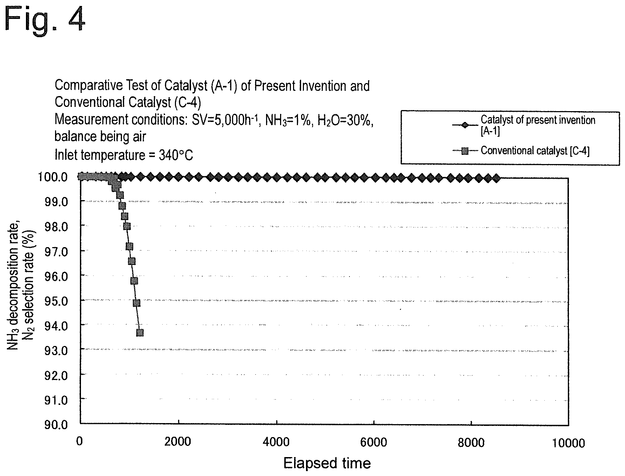

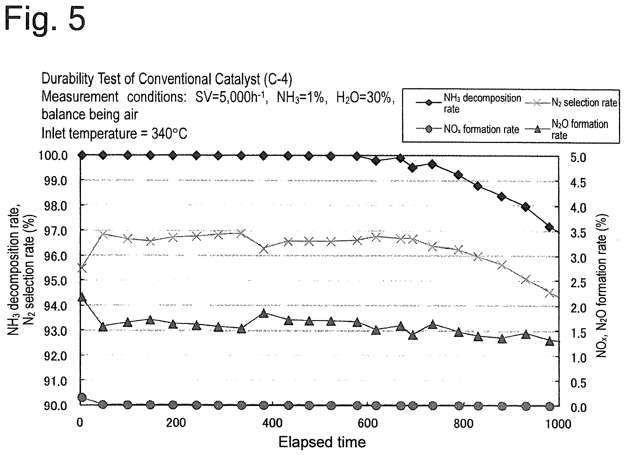

The results are shown in Figs. 4 and 5. As these results show, the comparative catalyst began to decrease in the $NH_3$ decomposition rate after a lapse of 800 hours. Then, the decrease rapidly progressed, and the $NH_3$ decomposition rate declined to 95% after 1200 hours. That is, the comparative catalyst markedly deteriorated in a short time as compared with the catalyst A-1 of the present invention.

**Claims**

1.  An ammonia decomposition catalyst for treating an ammonia exhaust gas containing moisture, comprising:

    a lower layer having a noble metal, an inorganic oxide, phosphorus, and a first proton type zeolite or a first ion exchange type zeolite ion-exchanged with Cu, Co or Fe ions; and
    an upper layer provided on the lower layer and having a second proton type zeolite or a second ion exchange type zeolite ion-exchanged with Cu, Co or Fe ions.

2.  The ammonia decomposition catalyst according to claim 1, wherein
    the phosphorus is concentrated within the lower layer on a side of the upper layer.

3.  The ammonia decomposition catalyst according to claim 1 or 2, wherein
    a copper oxide is further contained within the lower layer.

4.  The ammonia decomposition catalyst according to any one of claims 1 to 3, wherein
    the noble metal is Pt, Pd, Ir, Rh or a composite thereof, and the inorganic oxide is titania, zirconia, ceria-zirconia, alumina, silica, or a mixture thereof.

5.  The ammonia decomposition catalyst according to any one of claims 1 to 4, wherein
    the proton type zeolite and/or the ion exchange type zeolite are selected from the group consisting of β type zeolites, MFI type zeolites, Y type zeolites, mordenite type zeolites, and SAPO zeolites.

6.  The ammonia decomposition catalyst according to claim 5, wherein
    the first and/or second ion exchange type zeolites are Cu ion exchange β zeolites.

7.  The ammonia decomposition catalyst according to claim 5, wherein
    the first and/or second ion exchange type zeolites are Cu ion exchange SAPO zeolites.

8.  The ammonia decomposition catalyst according to any one of claims 1 to 7, further having
    a support provided on a surface of the lower layer opposite to a side of the upper layer.

9.  The ammonia decomposition catalyst according to any one of claims 1 to 8, wherein
    relative proportions (weight ratios) of the noble metal, the inorganic oxide, the phosphorus, and the proton type zeolite or the ion exchange type zeolite in the lower layer are noble metal : inorganic oxide : phosphorus : proton type zeolite or ion exchange type zeolite = 0.05 to 5 : 5 to 50 : 0.1 to 10 : 40 to 95, and
    a content of the zeolite in the upper layer is 20% by weight or more, but 400% by weight or less, based on a total weight of the noble metal, the inorganic oxide, the phosphorus, and the zeolite contained in the lower layer.

10. The ammonia decomposition catalyst according to any one of claims 1 to 9, wherein
a thickness of the lower layer is 10 to 200 $\mu$m, and
a thickness of the upper layer is 10 to 200 $\mu$m.

11. An exhaust gas treatment method for treating an ammonia exhaust gas containing moisture, comprising:

a step of bringing the ammonia decomposition catalyst according to any one of claims 1 to 10 and an ammonia exhaust gas into contact with each other to decompose ammonia into nitrogen and water.

12. The exhaust gas treatment method according to claim 11, wherein
the ammonia exhaust gas has a moisture concentration of 10% by volume or more.

13. The exhaust gas treatment method according to claim 12, wherein
the ammonia exhaust gas has a moisture concentration of 20 to 50% by volume.

**Patentansprüche**

1. Ein Katalysator für Ammoniakzersetzung zur Behandlung eines Feuchtigkeit enthaltenden Ammoniakabgases, umfassend:

eine untere Schicht mit einem Edelmetall, einem anorganischen Oxid, Phosphor und einem ersten Zeolith vom Protonentyp oder einem ersten Zeolith vom Ionenaustauschertyp, ionenausgetauscht mit Cu-, Co- oder Fe-Ionen; und
eine obere Schicht, welche auf der unteren Schicht bereitgestellt ist und einen zweiten Zeolith vom Protonentyp oder einen zweiten Zeolith vom Ionenaustauschertyp, ionenausgetauscht mit Cu-, Co- oder Fe-Ionen, aufweist.

2. Der Katalysator für Ammoniakzersetzung nach Anspruch 1, wobei
der Phosphor in der unteren Schicht auf einer Seite der oberen Schicht konzentriert ist.

3. Der Katalysator für Ammoniakzersetzung nach Anspruch 1 oder 2, wobei
weiter ein Kupferoxid in der unteren Schicht enthalten ist.

4. Der Katalysator für Ammoniakzersetzung nach einem der Ansprüche 1 bis 3, wobei
das Edelmetall Pt, Pd, Ir, Rh oder ein Komposit davon ist und das anorganische Oxid Titandioxid, Zirkoniumdioxid, Cerdioxid-Zirkoniumdioxid, Aluminiumoxid, Siliciumdioxid oder ein Gemisch davon ist.

5. Der Katalysator für Ammoniakzersetzung nach einem der Ansprüche 1 bis 4, wobei
der Zeolith vom Protonentyp und/oder der Zeolith vom Ionenaustauschertyp aus der Gruppe bestehend aus Zeolithen vom $\beta$-Typ, Zeolithen vom MFI-Typ, Zeolithen vom Y-Typ, Zeolithen vom Mordenit-Typ und SAPO-Zeolithen ausgewählt sind.

6. Der Katalysator für Ammoniakzersetzung nach Anspruch 5, wobei
der erste und/oder der zweite Zeolith vom Ionenaustauschertyp Cu-Ionenaustauscher-$\beta$-Zeolithe sind.

7. Der Katalysator für Ammoniakzersetzung nach Anspruch 5, wobei
der erste und/oder der zweite Zeolith vom Ionenaustauschertyp Cu-Ionenaustauscher-SAPO-Zeolithe sind.

8. Der Katalysator für Ammoniakzersetzung nach einem der Ansprüche 1 bis 7, welcher weiter
einen Träger aufweist, der auf einer Oberfläche der unteren Schicht, die einer Seite der oberen Schicht gegenüberliegt, bereitgestellt ist.

9. Der Katalysator für Ammoniakzersetzung nach einem der Ansprüche 1 bis 8, wobei relative Anteile (Gewichtsverhältnisse) des Edelmetalls, des anorganischen Oxids, des Phosphors und des Zeoliths vom Protonentyp oder des Zeoliths vom Ionenaustauschertyp in der unteren Schicht Edelmetall : anorganisches Oxid : Phosphor : Zeolith vom Protonentyp oder Zeolith vom Ionenaustauschertyp = 0,05 bis 5 : 5 bis 50 : 0,1 bis 10 : 40 bis 95 sind und

ein Gehalt des Zeoliths in der oberen Schicht 20 Gew.-% oder mehr, jedoch 400 Gew.-% oder weniger, bezogen auf ein Gesamtgewicht von in der unteren Schicht enthaltenem Edelmetall, anorganischen Oxid, Phosphor und Zeolith beträgt.

10. Der Katalysator für Ammoniakzersetzung nach einem der Ansprüche 1 bis 9, wobei
eine Dicke der unteren Schicht 10 bis 200 $\mu$m beträgt und
eine Dicke der oberen Schicht 10 bis 200 $\mu$m beträgt.

11. Ein Abgasbehandlungsverfahren zur Behandlung eines Feuchtigkeit enthaltenden Ammoniakabgases, umfassend:

einen Schritt des miteinander Inkontaktbringens des Katalysators für Ammoniakzersetzung nach einem der Ansprüche 1 bis 10 und eines Ammoniakabgases, um Ammoniak zu Stickstoff und Wasser zu zersetzen.

12. Das Abgasbehandlungsverfahren nach Anspruch 11, wobei
das Ammoniakabgas eine Feuchtigkeitskonzentration von 10 Vol.-% oder mehr aufweist.

13. Das Abgasbehandlungsverfahren nach Anspruch 12, wobei
das Ammoniakabgas eine Feuchtigkeitskonzentration von 20 bis 50 Vol.-% aufweist.

## Revendications

1. Catalyseur de décomposition d'ammoniac pour traiter un gaz d'échappement d'ammoniac contenant de l'humidité, comprenant :

une couche inférieure présentant un métal noble, un oxyde inorganique, du phosphore, et une première zéolite de type proton ou une première zéolite de type échange d'ions à échange d'ions avec des ions Cu, Co ou Fe ; et
une couche supérieure fournie sur la couche inférieure et présentant une seconde zéolite de type proton ou une seconde zéolite de type échange d'ions à échange d'ions avec des ions Cu, Co ou Fe.

2. Catalyseur de décomposition d'ammoniac selon la revendication 1, où
le phosphore est concentré dans la couche inférieure sur un côté de la couche supérieure.

3. Catalyseur de décomposition d'ammoniac selon la revendication 1 ou 2, où
un oxyde de cuivre est de plus contenu dans la couche inférieure.

4. Catalyseur de décomposition d'ammoniac selon l'une quelconque des revendications 1 à 3, où
le métal noble est Pt, Pd, Ir, Rh ou un composite de ceux-ci, et l'oxyde inorganique est l'oxyde de titane, l'oxyde de zirconium, l'oxyde de cérium-oxyde de zirconium, l'alumine, la silice, ou un mélange de ceux-ci.

5. Catalyseur de décomposition d'ammoniac selon l'une quelconque des revendications 1 à 4, où
la zéolite de type proton et/ou la zéolite de type échange d'ions sont choisies dans le groupe constitué de zéolites de type $\beta$, zéolites de type MFI, zéolites de type Y, zéolites de type mordénite, et zéolites SAPO.

6. Catalyseur de décomposition d'ammoniac selon la revendication 5, où
les première et/ou seconde zéolites de type échange d'ions sont des zéolites $\beta$ à échange d'ions Cu.

7. Catalyseur de décomposition d'ammoniac selon la revendication 5, où
les première et/ou seconde zéolites de type échange d'ions sont des zéolites SAPO à échange d'ions Cu.

8. Catalyseur de décomposition d'ammoniac selon l'une quelconque des revendications 1 à 7, comprenant de plus
un support fourni sur une surface de la couche inférieure opposée à un côté de la couche supérieure.

9. Catalyseur de décomposition d'ammoniac selon l'une quelconque des revendications 1 à 8, où
des proportions relatives (rapports massiques) du métal noble, de l'oxyde inorganique, du phosphore, et de la zéolite de type proton ou de la zéolite de type échange d'ions dans la couche inférieure sont métal noble : oxyde inorganique : phosphore : zéolite de type proton ou zéolite de type échange d'ions = 0,05 à 5 : 5 à 50 : 0,1 à 10 : 40 à 95, et une teneur de la zéolite dans la couche supérieure est de 20 % en masse ou supérieure, mais de 400 % en masse ou inférieure, rapporté à une masse totale du métal noble, de l'oxyde inorganique, du phosphore, et de la zéolite contenus dans la couche inférieure.

10. Catalyseur de décomposition d'ammoniac selon l'une quelconque des revendications 1 à 9, où
une épaisseur de la couche inférieure est de 10 à 200 $\mu$m, et
une épaisseur de la couche supérieure est de 10 à 200 $\mu$m.

11. Procédé de traitement de gaz d'échappement pour traiter un gaz d'échappement d'ammoniac contenant de l'humidité, comprenant :

une étape de mise en contact du catalyseur de décomposition d'ammoniac selon l'une quelconque des revendications 1 à 10 et d'un gaz d'échappement d'ammoniac l'un avec l'autre pour décomposer l'ammoniac en azote et eau.

12. Procédé de traitement de gaz d'échappement selon la revendication 11, où
le gaz d'échappement d'ammoniac présente une concentration d'humidité de 10 % en volume ou supérieure.

13. Procédé de traitement de gaz d'échappement selon la revendication 12, où
le gaz d'échappement d'ammoniac présente une concentration d'humidité de 20 à 50 % en volume.

# Fig. 1

Results of Catalyst Performance Evaluation
Measurement conditions: $SV=10,000h^{-1}$, $NH_3=1\%$, $H_2O=30\%$, balance being air

# Fig. 2

Durability Test of Catalyst (A-1) of Present Invention
Measurement conditions: SV=5,000h$^{-1}$, NH$_3$=1%, H$_2$O=30%,
balance being air
Inlet temperature = 340°C

# Fig. 3

Durability Test of Catalyst (D-1) of Present Invention
Measurement conditions: SV=10,000h⁻¹, NH₃=1%, H₂O=30%,
balance being air
Inlet temperature = 250°C

Durability Test of Catalyst (D-1) of Present Invention
Measurement conditions: SV=10,000h⁻¹, NH₃=1%, H₂O=30%,
balance being air
Inlet temperature = 340°C

# Fig. 4

Comparative Test of Catalyst (A-1) of Present Invention and
Conventional Catalyst (C-4)
Measurement conditions: SV=5,000h$^{-1}$, NH$_3$=1%, H$_2$O=30%,
balance being air
Inlet temperature = 340°C

# Fig. 5

Durability Test of Conventional Catalyst (C-4)
Measurement conditions: SV=5,000h$^{-1}$, NH$_3$=1%, H$_2$O=30%, balance being air
Inlet temperature = 340°C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11076761 A
- JP 10309437 A
- JP 5146634 A
- JP 2005095786 A
- JP 2002052381 A
- JP 2002066538 A
- WO 2006006702 A
- WO 2009075311 A
- JP 2002028637 A

**Non-patent literature cited in the description**

- *Applied Catalysis B: Environmental,* 2012, vol. 111-112, 445-455
- *Chemical Engineering Science,* 2012, vol. 75, 75-83